# DEMANDE DE BREVET EUROPEEN

(11) **EP 1 382 235 A1**
(43) Date de publication de la demande: **21.01.2004**
(21) Numéro de dépôt: 03291766.8
(22) Date de dépôt: 17.07.2003
(51) Int. Cl.: A01B 21/08, A01B 61/04

(54) **Machine de travail du sol telle qu'une déchaumeuse**

(30) Priorité: 18.07.2002 FR 0209157
(71) Demandeur: Société Nouvelle Fenet, Bergueneuse, 62134 Anvin (FR)
(72) Inventeur: Besson, Patrick, 62134 Anvin (FR)
(74) Mandataire: Fosse, Danièle

(57) **Abrégé**

L'invention concerne une machine de travail du sol telle qu'une déchaumeuse, du type comprenant un châssis porté ou tracté comprenant au moins un train d'outils de travail du sol tels que des disques (3).

L'invention consiste en ce que les outils de travail du sol sont montés oscillants par rapport au châssis et sont positionnés en amont de leur point de fixation sur le châssis par rapport au sens d'avancement de la machine.

Application aux machines de travail du sol.

## Description

La présente invention concerne une machine de travail du sol telle qu'une déchaumeuse, du type comprenant un châssis porté ou tracté comprenant au moins un train d'outils de travail du sol tels que des disques.

Dans les machines de travail du sol de ce type, les disques sont montés sur le châssis de manière à former des trains avant et arrière et de manière à être tirés par rapport au sens d'avancement de la machine. De manière à pouvoir absorber les obstacles se trouvant sur la trajectoire du disque, on a prévu de monter le disque oscillant par rapport au châssis comme par exemple dans EP-A-0 540 995, WO-A-0219792. Ainsi, par l'oscillation du disque par rapport au châssis et parce qu'ils sont tirés par le châssis, la composante liée à l'avancement du châssis tend à soulever les disques. En conséquence, on prévoit des moyens de rappel élastique tendant à ramener les disques vers le sol.

Dans ce type de machine, il convient également de pouvoir obtenir une profondeur de travail satisfaisante malgré les obstacles rencontrés.

Ainsi, on connaît par FR-A-2 630 286, un appareil à disques pour le travail du sol en profondeur dont chaque disque est porté individuellement par un dispositif qui permet son effacement sur un obstacle. Ainsi, ce dispositif est constitué d'un bras support du disque qui est articulé sur une chape à laquelle sont aussi articulés un bras de commande et un vérin. De cette manière l'appui de chaque disque résulte de l'action du vérin. Cependant un tel dispositif est relativement lourd à mettre en oeuvre puisqu'il nécessite un vérin pour chaque disque.

Dans le document FR-A-2 763 472 est proposé un déchaumeur comportant des dents, des disques et un rouleau. Chaque disque est monté sur une poutre entraînable en pivotement par rapport au support à l'aide d'un vérin actionnant une bielle provoquant la déformation d'un parallélogramme mettant en liaison la poutre et le support. Ce pivotement permet un réglage de la hauteur du disque. Ce réglage est réalisé par l'utilisateur avant chaque travail et ne peut être modifié sans intervention de l'utilisateur. Ce dispositif de pivotement ne permet donc pas de réguler la hauteur du disque par rapport à des obstacles mais permet juste de définir une profondeur de travail de ce disque, n'autorisant pas l'effacement du disque lors de la rencontre d'un obstacle.

Dans le document US-A-4208974, on propose un semoir pourvu d'un couteau creusant la terre pour pourvoir déposer ensuite les graines. Chaque couteau est monté sur un support pouvant pivoter par rapport à un élément de châssis fixe, lorsque le couteau rencontre un obstacle. Ce pivotement permet de dépasser l'obstacle puis un moyen de rappel élastique tel qu'un ressort permet de ramener le couteau en position. Une roue de jauge est positionnée en avant du couteau de manière à induire une profondeur de pénétration de celui-ci réglable et constante au cours du travail. Un tel agencement est prévu pour un semoir et non pour une machine de travail du sol telle qu'une déchaumeuse.

Dans le document EP-A-0 426 960, on a proposé un dispositif de binage dans lequel deux socs sont montés l'un derrière l'autre mais décalés en ligne sur un support qui est lui-même monté pivotant par rapport à une tige verticale elle-même montée réglable en hauteur par rapport au châssis. Lorsqu'un soc bute sur un obstacle dans le sol, la liberté de pivotement permet de soulever le support et l'ensemble des socs pour permettre le passage de l'obstacle et un ressort permet de ramener le support vers le sol. Un tel dispositif conduit à des irrégularités dans le travail, en effet, c'est l'ensemble du support qui est soulevé et par conséquent, l'autre soc ne peut plus travailler. Par conséquent, un tel dispositif n'offre pas des résultats de travail satisfaisants.

On connaît également par US-A-5 878 821, un dispositif de travail du sol pourvu d'outils de travail tels que des disques. Ces disques sont montés entraînables en pivotement par rapport au châssis à l'aide de vérin hydraulique pour déterminer leur profondeur de travail. La position en amont de leur point de fixation des disques par rapport au sens d'avancée n'apporte aucun bénéfice quant à la pénétration dans le sol qui est réglée par la hauteur des disques commandée par le vérin. Lorsqu'un disque d'un tel dispositif rencontre un obstacle, il ne peut pas le surmonter par pivotement libre sauf à commander l'actionnement du vérin. L'agencement entraîne alors le soulèvement de la barre de disques et donc une discontinuité du travail qui n'est pas satisfaisante.

Afin de pallier ces inconvénients, la présente invention a pour but de proposer une machine de travail du sol dans laquelle les disques ont tendance à s'enfoncer d'eux-mêmes dans le sol du fait de l'avancement de la machine et qui présente une structure simple à mettre en oeuvre.

A cet effet, l'invention a pour objet une machine de travail du sol telle qu'une déchaumeuse, du type comprenant un châssis porté ou tracté comprenant au moins un train d'outils de travail du sol tels que des disques, caractérisée en ce que les outils de travail du sol sont montés oscillants par rapport au châssis et sont positionnés en amont de leur point de fixation sur le châssis par rapport au sens d'avancement de la machine.

Ainsi de manière avantageuse, lors de l'avancée de la machine, la composante de l'effort sur le disque liée à cet avancement est dirigée vers le sol et tend à promouvoir la pénétration du disque dans le sol sans nécessiter de réglage particulier. De cette façon, il n'est pas besoin de lester le châssis pour favoriser la pénétration des disques ni de prévoir des moyens de réglage de la profondeur de pénétration des disques. La machine fonctionne comme une brouette, les disques étant poussés et non plus tirés comme précédemment.

De préférence, un disque est monté oscillant sur le châssis par l'intermédiaire d'un bras support. Ce bras support porte le disque à une extrémité et présente une articulation à l'autre extrémité ainsi qu'un boîtier de fixation sur le châssis et un moyen de rappel élastique. Ainsi, les disques sont montés individuellement oscillants sur le châssis.

Ce moyen de rappel élastique peut être constitué d'un ressort ou d'un bloc de matière élastique telle qu'un élastomère. Ce moyen de rappel élastique permet de maintenir le disque au repos sans qu'il remonte trop haut.

Lorsque la machine selon l'invention travaille, la pénétration du disque est favorisée par son positionnement en amont de son point de fixation sur le châssis dans le sens d'avancement de la machine. Lorsque le disque rencontre un obstacle, le moyen de rappel élastique en se comprimant, permet d'escamoter le disque et de surmonter l'obstacle.

Une machine de travail selon l'invention peut comporter des disques montés individuellement pour former des trains avant et arrière. Mais elle peut également être constituée de paires de disques de diamètres différents montés sur un même palier porté par un bras support monté oscillant sur le châssis. De préférence, les disques de diamètres différents sont montés sur le palier de sorte que le disque de diamètre inférieur présente sa partie concave tournée vers le palier tandis que le disque de diamètre supérieur a sa partie concave tournée vers l'extérieur, le palier étant incliné par rapport au sol.

Dans cette machine de travail du sol, les paires de disques portées par des paliers inclinés présentent une pénétration agressive du sol qui est encore améliorée par la disposition desdites paires de disques en amont par rapport à leur point de fixation sur le châssis dans le sens de l'avancement de la machine.

On décrira maintenant l'invention plus en détail en référence au dessin dans lequel:
La figure 1 représente une vue latérale d'un disque d'une machine selon l'invention ; et
La figure 2 représente une vue schématique du dessus d'un châssis selon une autre forme de réalisation de l'invention.

La machine de travail du sol telle qu'une déchaumeuse selon l'invention comprend un châssis porté ou tracté.

Le châssis peut comprendre un train avant et un train arrière d'outils de travail du sol tels que des disques montés libres en rotation.

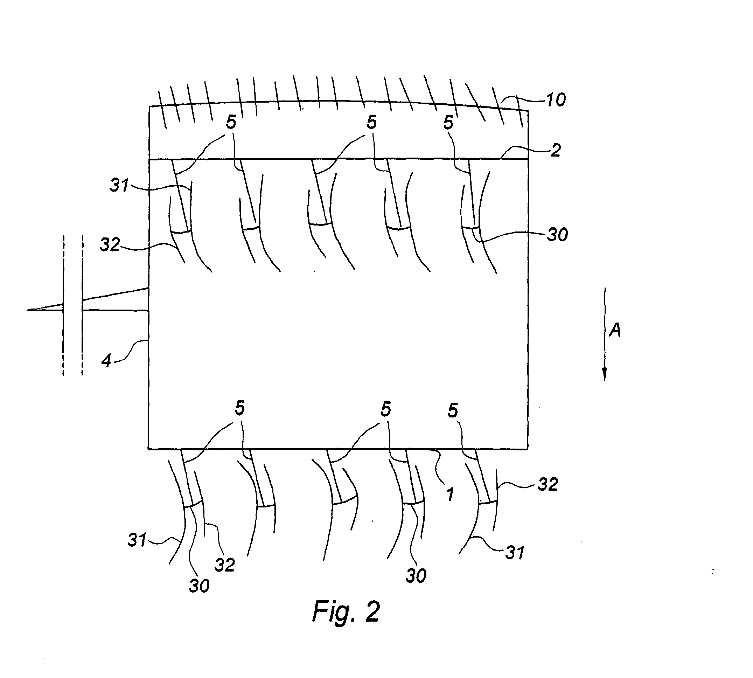

Le châssis peut présenter une poutre centrale ou un châssis central portant deux châssis latéraux 4 comme cela est le cas de la machine représentée à la figure 2. Chaque châssis latéral 4 comporte ainsi une poutre 1 sur laquelle sont montés des disques formant un train avant et une poutre arrière 2 sur laquelle sont montés des disques pour former un train arrière. Les trains de disques formés par les poutres et les disques peuvent être positionnables par rapport au châssis pour former une machine en V par exemple. De même, les châssis latéraux 4 peuvent être repliables pour passer en position transport de la machine.

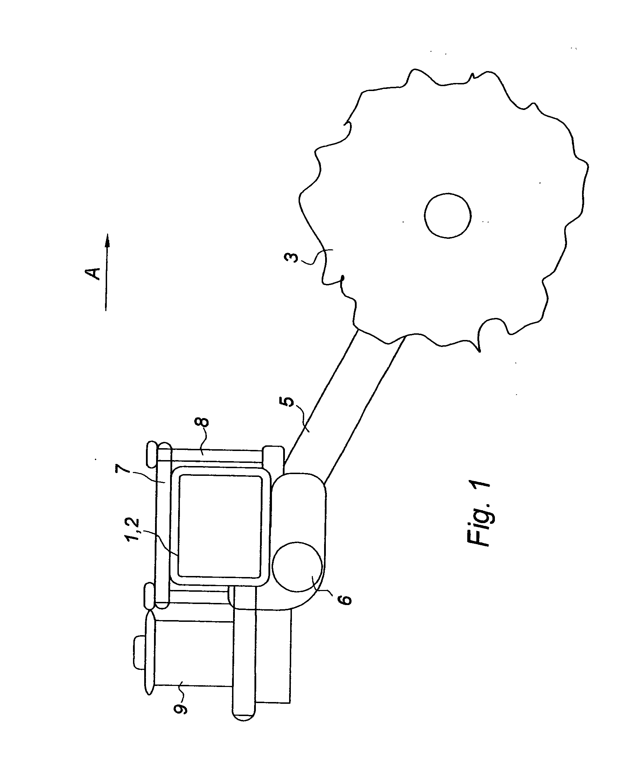

A la figure 1, un disque 3 d'un train avant ou arrière est monté oscillant par rapport au châssis, plus précisément par rapport à la poutre 1 ou 2 par l'intermédiaire d'un bras support 5.

Le bras support 5 porte le disque 3 à une extrémité et présente une articulation 6 à l'autre extrémité qui autorise l'oscillation du disque par rapport au châssis.

Un boîtier de fixation 7 fixé par des boulons 8 permet de monter le bras support 5 sur la poutre 1 ou 2 du châssis 4.

De préférence, un moyen de rappel élastique 9 tel qu'un bloc élastomère est prévu.

Comme on peut le voir, le disque 3 est monté par rapport au châssis de manière à être disposé en amont de la poutre 1 ou 2 dans le sens d'avancement de la machine représenté par la flèche A.

A la figure 2, le positionnement en amont des disques par rapport à leur point de fixation sur le châssis 4 est clairement visible.

Les outils de la machine représentée à la figure 2 sont des disques de diamètres différents montés par paire sur un même palier 30. Ainsi, un palier 30 porte un disque d'un certain diamètre 31 et un disque de plus petit diamètre 32. Le disque de petit diamètre 32 est monté sa face concave tournée vers le palier 30 tandis que le disque de plus grand diamètre 31 est monté sur le palier sa face concave tournée vers l'extérieur.

De préférence, le châssis latéral 4 porte également un rouleau suiveur 10.

Une telle machine de travail offre une pénétration du sol lors du travail particulièrement performante.

## Revendications

1. Machine de travail du sol telle qu'une déchaumeuse, du type comprenant un châssis porté ou tracté comprenant au moins un train d'outils de travail du sol tels que des disques (3 ; 31, 32),
**caractérisé en ce que** les outils de travail du sol sont montés oscillants par rapport au châssis et sont positionnés en amont de leur point de fixation sur le châssis par rapport au sens d'avancement de la machine.

2. Machine selon la revendication 1,
**caractérisée en ce que** les disques (3) sont montés individuellement oscillants sur le châssis.

3. Machine selon la revendication 1,
**caractérisée en ce que** les disques (31, 32) présentent des diamètres différents, un disque (31) de grand diamètre étant monté sur un même palier (30) qu'un disque (32) de plus petit diamètre, la face concave du disque (32) de plus petit diamètre étant tournée vers le palier (30) tandis que la face concave du disque (31) de plus grand diamètre est tournée vers l'extérieur, les paires de disques (31, 32) étant montées oscillantes par rapport au châssis.

4. Machine selon l'une des revendications 1 à 3,
**caractérisée en ce qu'**un disque (3) ou une paire de disques (31, 32) est monté oscillant sur le châssis par l'intermédiaire d'un bras support (5) qui porte le disque (3) ou la paire de disques (31, 32) à une extrémité et présente une articulation (6) à l'autre extrémité ainsi qu'un boîtier de fixation (7) sur le châssis.

5. Machine selon la revendication 4,
**caractérisée en ce que** le bras support (5) présente également un moyen de rappel élastique (9) tel qu'un ressort ou un bloc de matière élastique.
